(19) Europäisches Patentamt
European Patent Office
Office européen des brevets

(11) EP 1 274 578 B1

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: **01907428.5**

(22) Anmeldetag: **10.01.2001**

(51) Int Cl.[7]: **B32B 27/36**, C08L 67/02, B29C 55/12, C08K 5/00, C08K 5/5317

(86) Internationale Anmeldenummer:
**PCT/EP2001/000210**

(87) Internationale Veröffentlichungsnummer:
**WO 2001/053088 (26.07.2001 Gazette 2001/30)**

(54) **MATTE, UV-STABILE, SULFONATGRUPPENENTHALTENDE, SCHWERENTFLAMMBARE, THERMOFORMBARE KOEXTRUDIERTE POLYESTERFOLIE, VERFAHREN ZU IHRER HERSTELLUNG UND IHRE VERWENDUNG**

MATT, UV-STABLE, FLAME-RETARDANT, THERMOFORMABLE, CO-EXTRUDED POLYESTER FILM CONTAINING SULPHONATE GROUPS, A METHOD FOR THE PRODUCTION THEREOF AND THE USE OF THE SAME

FEUILLE POLYESTER MATTE, STABLE AUX U.V., PEU INFLAMMABLE, THERMOFORMABLE, COEXTRUDEE, SON PROCEDE DE REALISATION ET SON UTILISATION

(84) Benannte Vertragsstaaten:
**DE FR GB IT LU NL**

(30) Priorität: **20.01.2000 DE 10002181**

(43) Veröffentlichungstag der Anmeldung:
**15.01.2003 Patentblatt 2003/03**

(73) Patentinhaber: **Mitsubishi Polyester Film GmbH
65203 Wiesbaden (DE)**

(72) Erfinder:
- **MURSCHALL, Ursula
55283 Nierstein (DE)**
- **KERN, Ulrich
55218 Ingelheim (DE)**
- **CRASS, Günther
65232 Taunusstein (DE)**

(74) Vertreter: **Schweitzer, Klaus, Dr. et al
Patentanwaltskanzlei Zounek
Industriepark Kalle-Albert
Gebäude H391
Rheingaustrasse 190-196
65174 Wiesbaden (DE)**

(56) Entgegenhaltungen:
**EP-A- 0 213 466**
**EP-A- 0 882 575**
**US-A- 5 073 435**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine biaxial orientierte Polyesterfolie, welche eine Basisschicht, die bevorzugt zu mindestens 70 Gew.-% aus einem thermoplastischen Polyester besteht, aufweist, thermoformbar ist, mindestens einen UV-Absorber und mindestens ein Flammschutzmittel enthält und mindestens einer matten Deckschicht versehen ist, welche eine Mischung bzw. einen Blend aus zwei Komponenten I und II enthält. Die Erfindung betrifft weiterhin ein Verfahren zur Herstellung der Folie und ihre Verwendung.

Die Komponente I der Mischung bzw. des Blends ist bevorzugt ein Polyethylenterephthalat-Homopolymer oder Polyethylenterephthalat-Copolymer oder eine Mischung aus Polyethylenterephthalat Homo- und/oder Copolymeren.

Die Komponente II der Mischung bzw. des Blends ist ein Polyethylenterephthalat-Copolymer, welches aus dem Kondensationsprodukt der folgenden Monomeren bzw. deren zur Bildung von Polyestern befähigten Derivaten besteht: Isophthalsäure, aliphatische Dicarbonsäure, Sulfomonomeres, das eine Metallsulfonatgruppe an dem aromatischen Teil einer aromatischen Dicarbonsäure enthält und aliphatisches oder cycloaliphatisches Glykol.

Die Deckschicht zeichnet sich durch eine matte Oberfläche bzw. Optik aus. Die erfindungsgemäße Folie ist für die Verwendung im Messebau, in Gewächshäusern oder für Anwendungen im industriellen und Tiefzieh-Sektor gut geeignet, bei denen insbesondere ein UV-Schutz bzw. eine nicht Durchlässigkeit des UV-Lichtes und eine Schwerentflammbarkeit z.B. nach DIN 4102 Teil2, Baustoffklasse B2 und B1 gefordert wird.

Die Industrie hat einen hohen Bedarf an transparenten, hochglänzenden Kunststofffolien, wie z.B. biaxial orientierte Polypropylen- oder biaxial orientierte Polyesterfolien. Daneben besteht in zunehmendem Maße ein Bedarf an solchen transparenten Folien und Formkörpern, die nach DIN 4102 schwerentflammbar sind und bei denen zumindest eine Oberflächenschicht nicht hochglänzend ist sondern sich durch ein charakteristisches mattes Erscheinungsbild auszeichnet und dadurch z.B. der Anwendung bzw. den Formkörpern ein besonderes attraktives und damit werbewirksames Aussehen und einen Schutz vor UV-Strahlung, bei gleichzeitiger Schwerentflammbarkeit, verleiht.

In der **EP 346 647** wird eine biaxial orientierte Polyesterfolie beschrieben, die mindestens eine Deckschicht enthält, die einen Füllstoff in einer Konzentration von 0,5 bis 50 % enthält, wobei der Durchmesser dieses Füllstoffes in einem bestimmten Verhältnis zur Schichtdicke der Deckschicht steht. Weiterhin weist die Deckschicht eine bestimmte Dicke und einen bestimmten Kristallisationsgrad auf, der mit Hilfe der Raman-Spektroskopie ermittelt wird.

In der **US 4,399,179** wird eine koextrudierte biaxial orientierte Polyesterfolie beschrieben, die aus einer transparenten Basisschicht und mindestens einer matten Schicht besteht, welche im wesentlichen aus einem bestimmten Polyethylenterephthalat-Copolymer besteht und zudem innerte Partikel mit einem Durchmesser von 0,3 bis 20 μm in einer Konzentration von 3 bis 40 % enthält. Das spezielle Copolymer ist eine Verarbeitungshilfe, durch die die Viskosität der die innerten Partikeln enthaltenen Schmelze herabgesetzt wird, so dass eine einwandfreie Extrusion dieser Schicht möglich ist. Die Mattheit der Folie wird durch Zugabe der innerten Partikel in die entsprechende Schicht erreicht. Durch die Partikel wird die Transparenz beeinträchtigt.

In der **EP 0 144 878** wird eine selbstragende orientierte Folie aus thermoplastischem Kunststoff beschrieben, welche auf wenigstens einer ihrer beiden Oberflächen eine durchgehende Polyesterbeschichtung trägt, die als wässrige Dispersion auf die Folie vor dem letzten Streckschritt aufgebracht wird. Die Polyesterbeschichtung besteht aus einem Kondensationsprodukt von verschiedenen Monomeren bzw. deren zur Bildung von Polyestern befähigten Derivaten, besteht, wie Isophthalsäure, aliphatische Dicarbonsäure, Sulfomonomere und aliphatisches oder cycloaliphatisches Glykol.

In der **EP-A-0 620 245** sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie z.B. die UV-Stabilität solcher Folien zu verbessern sei, ist dieser Schrift jedoch nicht zu entnehmen.

In der **DE A 2346 787** ist ein schwerentflammbarer Rohstoff beschrieben. Neben dem Rohstoff ist auch die Verwendung des zur Herstellung von Folien und Fasern beansprucht. Beim Einsatz dieses phospholanmodifizierten Rohstoffs zur Folienherstellung zeigen sich folgende Defizite:

Der Rohstoff ist sehr hydrolyseempfindlich und muß sehr gut vorgetrocknet werden. Beim Trocknen des Rohstoffes mit Trocknem, die dem Stand der Technik entsprechen, verklebt der Rohstoff, so dass nur unter schwierigsten Bedingungen eine Folie herstellbar ist.

Die so unter unwirtschaftlichen Bedingungen hergestellten Folien verspröden bei Temperaturbelastungen, d. h. die mechanischen Eigenschaften gehen aufgrund der Versprödung stark zurück, so dass die Folie unbrauchbar ist. Bereits nach 48 Stunden Temperaturbelastung tritt diese Versprödung auf.

In dem beschriebenen Stand der Technik finden sich keine Hinweise dafür, dass die Folien thermoformbar sind, wie der Folie zumindest auf einer Folienoberfläche ein niedriger Glanz bei einer weiterhin hohen Transparenz verliehen werden kann und dass die Folie eine hohe UV-Stabilität sowie eine Schwerentflammbarkeit aufweist.

Aufgabe der vorliegenden Erfindung war es deshalb, eine biaxial orientierte und transparente Polyesterfolie

mit mindestens einer matten Deckschicht zur Verfügung zu stellen, die sich einfach und wirtschaftlich herstellen läßt, die die guten physikalischen Eigenschaften der bekannten Folien besitzt, und sich darüber hinaus insbesondere durch die Absorption des UV-Lichtes und durch eine hohe UV-Stabilität, sowie durch eine Schwerentflammbarkeit nach DIN 4102 auszeichnet undfemerkeine Versprödung nach Temperaturbelastung zeigt. Weiterhin sollte diese Folie eine gute Thermoformbarkeit aufweisen und keine Entsorgungsprobleme verursachen.

Gelöst wird die Aufgabe durch eine biaxial orientierte Polyesterfolie mit dem eingangs erwähnten Aufbau bzw. Zusammensetzung.

Eine hohe UV-Stabilität bedeutet, dass die Folien durch Sonnenlicht oder andere UV-Strahlung nicht oder nur extrem wenig geschädigt werden, so dass sich die Folien für Außenanwendungen und/oder kritische Innenanwendungen eignen. Insbesondere sollen die Folien bei mehrjähriger Außenanwendungen nicht vergilben, keine Versprödungen oder Rißbildung an der Oberfläche zeigen und auch keine Verschlechterung der mechanischen Eigenschaften aufweisen. Hohe UV-Stabilität bedeutet demnach, dass die Folie das UV-Licht absorbiert und Licht erst im sichtbaren Bereich durchlässt.

Eine flammhemmende Wirkung bedeutet, dass die Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Des Weiteren soll die Folie den UL-Test 94 (Vertical Burning Test for Flammability of Plastic Material) bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Hinreichende Thermoformbarkeit bedeutet, dass sich die Folie auf handelsüblichen Tiefziehmaschinen ohne unwirtschaftliches Vortrocknen zu komplexen und großflächigen Formkörpern tiefziehen bzw. thermoformen läßt.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch ich Querrichtung hervorragend und ohne Abrisse orientieren läßt.

Zu der wirtschaftlichen Herstellung zählt, dass die Rohstoffe bzw. die Rohstoffkomponenten, die zur Herstellung der erfindungsgemäßen Folie benötigt werden, mit Industrietrocknern, die dem Standard der Technik genügen, getrocknet werden können. Wesentlich ist, dass die Rohstoffe nicht verkleben und nicht thermisch abgebaut werden. Zu diesen Industrietrocknern nach dem Stand der Technik zählen Vakuumtrockner, Wirbelschichttrockner, Fließbetttrockner und Festbetttrockner (Schachttrockner). Diese Trockner arbeiten bei Temperaturen zwischen 100 und 170 °C, bei denen die im Stand der Technik flammhemmend ausgerüsteten Rohstoffe verkleben, so dass keine Folienherstellung möglich ist.

Bei dem am schonensten trocknenden Vakuumtrockner durchläuft der Rohstoff einen Temperaturbereich von ca. 30 °C bis 130 °C bei einem Vakuum von 50 mbar. Danach ist ein sog. Nachtrockpen in einem Hopper bei Temperaturen von 100-130C° und einer Verweilzeit von 3 bis 6 Stunden erforderlich. Selbst hier verklebt der genannte Rohstoff extrem.

Keine Versprödungen nach Temperaturbelastung bedeutet, dass die Folie nach 100 StundenTempervorgang bei 100 °C in einem Umluftofen keine Versprödung und keine nachteiligen mechanischen Eigenschaften aufweist.

Unter Mischungen, besonders im Hinblick auf die Deckschicht(en), im Sinne der vorliegenden Erfindung sind mechanische Mischungen zu verstehen, welche aus den Einzelkomponenten hergestellt werden. Im allgemeinen werden hierzu die einzelnen Bestandteile als gepresste Formkörper kleiner Größe, z.B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II, welcher nicht mehr in die ursprünglichen Bestandteilen zerlegt werden kann. Ein Blend weist Eigenschaften wie ein homogener Stoff auf und kann durch geeignete Parameter charakterisiert werden.

Erfindungsgemäß ist die Folie zumindest zweischichtig. Sie umfaßt dann als Schichten eine Basisschicht B und die erfindungsgemäße Deckschicht A. In einer weiteren bevorzugten Ausführungsform der Erfindung ist die Folie dreischichtig aufgebaut und weist auf der einen Seite der Schicht B die Deckschicht A und auf der anderen Seite der Schicht B eine weitere Schicht C auf. In diesem Fall bilden die beiden Schichten A und C die Deckschichten. Diese können gleich oder verschieden sein. Erfindungsgemäß kann der UV-Absorber und das Flammschutzmittel in der/den Deckschicht(en) und/oder der Basisschicht und/oder in den gegebenenfalls vorhandenen Zwischenschichten enthalten sein.

Die Basisschicht B der Folie besteht bevorzugt zu mindestens 70 Gew.-% aus einem thermoplastischen Polyester. Dafür geeignet sind Polyester aus Ethylenglykol und Terephthalsäure (= Polyethylenterephthalat, PET), aus

Ethylenglykol und Naphthalin-2,6-dicarbonsäure (= Polyethylen-2,6-naphthalat, PEN), aus 1,4-Bis-hydroximethylcyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, insbesondere zu mindestens 95 mol-%, aus Ethylenglykol-und Terephthalsäure-Einheiten oder aus Ethylenglykol-und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (und/oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen. Von den cycloaliphatischen Diolen sind Cyclohexandiole (insbesondere Cyclohexan-1,4-diol) zu nennen. Geeignete aromatische Diole entsprechen beispielsweise der Formel $HO-C_6H_4-X-C_6H_4$ OH, wobei X für $-CH_2-$, $-C(CH_3)_2-$, $-C(CF_3)_2-$, -O-, -Soder $-SO_2-$ steht. Daneben sind auch Bisphenole der Formel $HO-C_6H_4-C_6H_4-OH$ gut geeignet.

Das für die Basisschicht und gegebenenfalls für andere Deckschichten oder Zwischenschichten eingesetzte PET besitzt einen Diethylenglykolgehalt (DEG-Gehalt) von >1,3 Gew.%, vorzugsweise >1,5 Gew.%, insbesondere >1,6 Gew.% und/oder ein Polyethylenglykolgehalt (PEG-Gehalt) von >1,3 Gew.%, vorzugsweise >1,5 Gew.%, insbesondere >1 6 Gew.%. Der DEG und/oder PEG-Gehalt liegt zwischen 1,3 Gew.-% und maximal 5,0 Gew.-%. Der DEG- und/oder PEG-Gehalt des Polyesters werden zweckmäßigerweise beim Rohstoffhersteller während des Polymerisationsprozesses eingestellt.

Es war überraschend, dass sich orientierte PET-Folien durch ein im Vergleich zum Standardpolyester höheren Diethylenglykolgehalt und/oder Polyethylenglykolgehalt thermoformen lassen.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenylx,x'-dicarbonsäuren (insbesondere Biphenyl-4,4'-dicarbonsäure), Diphenylacetylen-x,x'dicarbonsäuren (insbesondere Diphenylacetylen-4,4'-dicarbonsäure) oder Stilben-x,x'dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der erfindungsgemäßen Polyester kann z.B. nach dem Umesterungsverfahren erfolgen. Dabei geht man von Dicarbonsäureestem und Diolen aus, die mit den üblichen Umesterungskatalysatoren, wie Zink-, Calcium-, Lithium-, Magnesiumund Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Mindestens eine matte Deckschicht der erfindungsgemäßen Mehrschichtfolie enthält eine im folgenden näher beschriebene Mischung bzw. ein Blend aus zwei Komponenten I und II und gegebenenfalls zugesetzte Additive.

Die Komponente I der Deckschichtmischung bzw. des Blends enthält im wesentlichen einen thermoplastischen Polyester, insbesondere einen solchen Polyester wie erfürdie Basisschicht näher beschrieben wurde. Für die Erzeugung hoher Mattgrade hat es sich dabei als günstig erwiesen, wenn das Polyesterpolymere für die Komponente I der Deckschicht eine an sich vergleichsweise geringe Viskosität aufweist. Für die Beschreibung der Viskositäten der Schmelzen wird eine modifizierte Lösungsmittelviskosität (SV-Wert oder "standard viscosity") verwendet. Für handelsübliche Polyethylenterephthalate, die sich zur Herstellung von biaxial orientierten Folien eignen, liegen die SV-Werte im Bereich von 500 bis 1200. Um eine hohe Mattheit der Folie im Sinne der vorliegenden Erfindung zu bekommen, hat es sich als günstig erwiesen, wenn der SV-Wert der Polymeren für die Komponente I der Deckschicht im Bereich von 500 bis 800, bevorzugt im Bereich von 500 bis 750, insbesondere bevorzugt im Bereich von 500 bis 700 liegen.

Die Komponente II der Mischung bzw. des Blends der Deckschicht ist ein Polyethylenterephthalat-Copolymer, welches aus dem Kondensationsprodukt der folgenden Monomeren bzw. deren zur Bildung von Polyestern befähigten Derivaten besteht:

A) 65 bis 95 Mol-% Isophthalsäure;

B) 0 bis 30 Mol-% wenigstens einer aliphatischen Dicarbonsäure mit der Formel $HOOC(CH_2)_nCOOH$
wobei
n im Bereich von 1 bis 11 , bevorzugt 1 - 9, liegt;

C) 5 bis 15 Mol-% wenigstens eines Sulfomonomeren enthaltend eine Alkalimetallsulfonatgruppe an dem aromatischen Teil einer Dicarbonsäure, und

D) der zur Bildung von 100 Mol-% Kondensat notwendigen stöchiometrischen Menge eines copolymerisierbaren aliphatischen oder cycloaliphatischen Glykols

Die Prozentangaben sind bevorzugte Werte und jeweils bezogen auf die Gesamtmenge der die Komponente II bildenden Monomeren.

Die insgesamt anwesenden Säureäquivalente sollen auf molarer Basis im wesentlichen den insgesamt anwesenden Glykoläquivalenten entsprechen.

Als Komponente B) der Copolyester geeignete Dicarbonsäuren sind z.B. Malon-, Adipin-, Azelain-, Glutar-, Sebacin-, Kork-, Bernstein- und Brassylsäure sowie Mischungen dieser Säuren oder deren zur Bildung von Polyestern befähigte Derivate. Von den genannten Säuren wird Sebacinsäure bevorzugt.

Beispiele für Sulfomonomere, die eine Metallsulfonatgruppe an dem aromatischen Teil einer aromatischen Dicarbonsäure enthalten (Komponente C) , sind solche Monomere, die der folgenden allgemeinen Formel entsprechen:

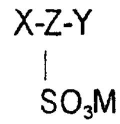

In dieser Formel ist

M ein einwertiges Kation eines Alkalimetalls, bevorzugt $Na^+$, $Li^+$ oder $K^+$.
Z ein dreiwertiger aromatischer Rest und
X und Y sind Carboxylgruppen oder Polyester bildende Äquivalente.

Monomere dieser Art sind in den **US 3,563,942** und **3,779,993** beschrieben. Beispiele solcher Monomeren sind Natrium-sulfoterephthalsäure, Natrium-5-sulfoisophthalsäure, Natrium-sulfophthalsäure, 5-(p-Natriumsulfphenoxy)-isophthalsäure, 5-(Natriumsulfopropoxy)-isophthalsäure und dergleichen Monomere sowie deren zur Bildung von Polyestern befähigte Derivate, wie z.B. die Dimethylester.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B.

Dimethylterephthalat, Dietylterephthalat und zahlreiche andere Ester, Halogenide oder Salze. Bevorzugt werden die Säuremonomeren als Dimethylester verwendet, da auf diese Weise die Kondensationsreaktion besser gesteuert werden kann.

Als Komponente D) geeignete Glykole sind z.B. Ethylenglykol, 1,5-Pentadiol, 1,6-Hexandiol, Neopentylglykol, 1,10-Decandiol, Cyclohexan-dimethanol und ähnliche Substanzen. Bevorzugt wird Ethylenglykol verwendet.

Die Copolyester der Komponente II können durch bekannte Polymerisationstechniken hergestellt werden. Im allgemeinen wird so verfahren, dass die Säurekomponenten mit Glykol zusammengebracht und in Anwesenheit eines Veresterungskatalysators erhitzt werden, mit anschließender Zugabe eines Polykondensationskatalysators (Kunststoff Handbuch Bd. VIII, Polyester, Carl Hanser Verlag München).

Es hat sich gezeigt, dass die verhältnismäßigen Anteile der Komponenten A, B, C und D, die zur Herstellung der erfindungsmäßigen Mischungen bzw. Blends eingesetzt werden, entscheidend für das Erzielen der matten Deckschicht sind. So sollte z.B. Isophthalsäure (Komponente A) zu mindestens 65 Mol-% als Säurekomponente vorhanden sein. Bevorzugt ist die Komponente A als reine Isophthalsäure, die in einer Menge von etwa 70 bis 95 Mol-% vorhanden ist.

Für die Komponente B gilt, dass jede Säure mit der genannten Formel zufriedenstellende Ergebnisse bringt, wobei Adipinsäure, Azelainsäure, Sebacinsäure, Malonsäure, Bemsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten der Mischung I, wenn die Komponente B in der Zusammensetzung enthalten ist.

Die Glykolkomponente ist in ungefähr stöchiometrischer Menge vorhanden.

Die für die Zwecke der Erfindur g geeigneten Copolyester der Komponente II zeichnen sich weiterhin dadurch aus, dass sie eine Säurezahl unter 10 , vorzugsweise von 0 bis 3, ein mittleres Mol-Gewicht unter etwa 50.000 und einen SV-Wert im Bereich von etwa 30 bis 700, vorzugsweise etwa 350 bis 650, aufweisen.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II =10:90 bis I:II = 95:5, vorzugsweise zwischen I:II = 20:80 bis I:II = 95:5 und insbesondere zwischen I:II =30:70 bis I:II =95:5.

Die Folie enthält erfindungsgemäß mindestens einen UV-Absorber und mindestens ein Flammschutzmittel. Der UV-Absorber wird zweckmäßigerweise über die sogenannte Masterbatch-Technologie direkt bei der Folienherstellung zudosiert wird, wobei die Konzentration des UV-Stabilisators vorzugsweise zwischen 0,01 Gew.-% und 5 Gew.-% bezogen auf das Gewicht der ihn enthaltenden Schicht liegt.

Das Flammschutzmittels wird erfindungsgemäß bevorzugt über die sogenannte Masterbatch-Technologie direkt bei der Folienherstellung zudosiert, wobei die Konzentration zwischen 0,5 und 30 Gew.-%, vorzugsweise zwischen 1 und 20 Gew.-%, bezogen auf das Gewicht der es enthaltenden Schicht, liegt.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflusst werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vemetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die m indestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

In einer ganz besonders bevorzugten Ausführungsform enthält die erfindungsgemäße Folie 0,01 Gew.-% bis 5,0 Gew.-% 2-(4,6-Diphenyl-1,3,5-triazin-2-yl)-5-(hexyl)oxyphenol der Formel

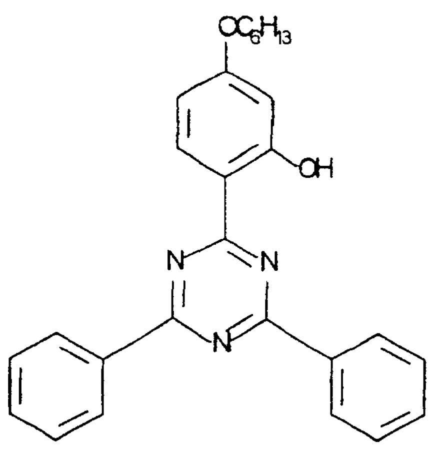

oder 0,01 Gew.-% bis 5,0 Gew.-% 2,2-Methylen-bis(6-(2H-benzotriazol-2-yl)4-(1,1,2,2-tetramethylpropyl)-phenol der Formel

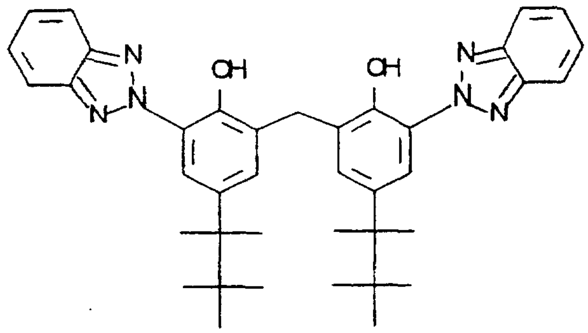

In einer bevorzugten Ausführungsform können auch Mischungen dieser beiden UV-Stabilisatoren oder Mischungen von m indestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Der oder die UV-Stabilisatoren sind vorzugsweise in der/den Deckschichten enthalten. Bei Bedarf kann auch die Kemschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein Antioxidanz zu erreichen, hätte jedoch bei Bewitterung festgestellt, dass die Folie schnell gelb wird.

Vor dem Hintergrund, dass UV-Stabilisatoren das UV-Licht absorbieren und somit Schutz bieten, hätte der Fachmann wohl handelsübliche eingesetzt. Dabei hätte er festgestellt, dass

- der UV-Stabilisator eine mangelnde thermische Stabilität hat und sich bei Temperaturen zwischen 200 °C und 240 °C zersetzt und ausgast;
- er große Mengen (ca. 10 bis 15 Gew.-%) UV-Stabilisatoreinarbeiten muß, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbwertunterschieden (YID) um die 25. Des Weiteren hätte er festgestellt, dass die mechanischen Eigenschaften negativ beeinflusst werden. Beim Verstrecken hätte er ungewöhnliche Probleme bekommen wie

- Abrisse wegen mangelnder Festigkeit, d. h. E-Modul zu niedrig;
- Düsenablagerungen, was zu Profilschwankungen führt;
- Walzenabiagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind beispielsweise organische Phosphorverbindungen wie Carboxyphosphinsäuren und deren Anhydride. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Daher war es mehr als überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Daher war es mehr als überraschend, dass bei erzieltem Flammschutz und der hohen UV-Stabilität der erfindungsgemäßen Folie

- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

Damit ist eine Folie auch wirtschaftlich rentabel.

Des Weiteren ist überraschend, dass auch das Regenerat wieder einsetzbar ist, ohne den Gelbwert der Folie negativ zu beeinflussen.

In einer ganz besonders bevorzugten Ausführungsform enthält die erfindungsgemäße Folie 1 Gew.-% bis 20 Gew.-% Flammschutzmittel.

Der Thermoformprozess umfasst in der Regel die Schritte Vortrocknen, Aufheizen, Formen, Abkühlen, Entformen, Tempern. Beim Thermoformprozess wurde festgestellt, dass sich die erfindungsgemäßen Folien ohne vorheriges Vortrocknen überraschenderweise tiefziehen lassen. Dieser Vorteil im Vergleich zu tiefziehfähigen Polycarbonatoder Polymethylmethacrylat-Folien, bei denen je nach Dicke Vortrocknungszeiten von 10 - 15 Stunden bei Temperaturen von 100 °C - 120 °C, erforderlich sind, reduziert drastisch die Kosten des Umformprozesses.

Für das Thermoformen wurden beispielsweise folgende Verfahrensparameter gefunden

| **Verfahrensschritt** | **Erfindungsgemäße Folie** |
|---|---|
| Vortrocknen | Nicht erforderlich |
| Temperatur der Form °C | 100 - 160 |
| Aufheizzeit | < 5 sec pro 10 µm Dicke |
| Folientemperatur beim Verformen °C | 160 - 200 |
| Möglicher Verstreckfaktor | 1,5-2,0 |
| Detailwiedergabe | Gut |
| Schrumpf (Schwindung) % | < 1,5 |

Die Basisschicht und/oder die Deckschicht(en) und/oder die Zwischenschichten können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vemetzte Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z. B. als glykolische Dispersion während der Polykondensation oder über Masterbatche bei der Extrusion zugegeben werden. Als besonders geeignet haben sich Pigmentkonzentrationen von 0,0001 bis 10 Gew.-%; bezogen auf die sie enthaltenden Schichten, erwiesen. Durch die Zugabe von diesen Partikeln in die Deckschicht oder die Deckschichten hat man eine weitere vorteilhafte Möglichkeit, den Mattgrad der Folie zu variieren. Mit der Zunahme der Pigmentkonzentration ist in der Regel auch eine Zunahme des Mattgrades der Folie verbunden. Eine detaillierte Beschreibung geeigneter Antiblockmittel findet sich beispielsweise in der **EP A 0 602 964.**

Gegenstand der vorliegenden Erfindung ist ferner ein Verfahren zur Herstellung dieser Folie, welches folgende Schritte umfasst:

a) Herstellen einer Folie aus Basis- und Deckschicht(en), und gegebenenfalls Zwischenschichten, durch Koextrusion,
b) biaxiales Verstrecken der Folie und
c) Thermofixieren der verstreckten Folie.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck ( 20 bis 80 mbar, vorzugsweise 30 bis 60 mbar, insbesondere 40 bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160°C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90 bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Erfindungsgemäß kann der UV-Absorber bereits beim Rohstoffhersteller in die Polymere der Deckschichten und/oder der Basisschicht eingearbeitet werden.

Besonders bevorzugt ist die Zugabe des UV-Absorbers über die Masterbatch-Technologie direkt bei der Folienherstellung. Der UV-Absorber wird in einem festen Trägermaterial voll dispergiert. Als Trägermaterial kommen, das Deckschicht- und/oder das Basisschichtpolymer selbst oder auch andere Polymere, die mit dem Thermoplast ausreichend verträglich sind, in Frage.

Wichtig bei der Masterbatch-Technologie ist, dass die Korngröße und das Schüttgewicht des Masterbatches ähnlich der Korngröße und dem Schüttgewicht der Basisschicht- und/oder Deckschichtpolymeren ist, so dass eine homogene Verteilung des UV-Absorbers und damit eine homogene UV-Stabilität erfolgen kann.

Zur Herstellung der erfindungsgemäßen Deckschicht(en) werden zweckmäßig Granulate aus der Mischungskomponente I und Granulate aus der Mischungskomponente II im gewünschten Mischungsverhältnis sowie gegebenenfalls das Flammschutz-Masterbatch, welches vorgetrocknet ist, und gegebenenfalls das UV-Masterbatch direkt dem Extruder zugeführt. Es hat sich als zweckmäßig erwiesen, für die Extrusion der erfindungsgemäßen matten Deckschicht(en) einen Zweischneckenextruder zu verwenden, wie er z.B. in der **EP 0 826 478** beschrieben ist. Die Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich weitere Copolymere aus den Homopolymeren und den Copolymeren bilden können.

Die Polymere für die Basisschicht sowie das Flammschutz-Masterbatch, welches vorgetrocknet ist, und gegebenenfalls das UV-Masterbatch werden zweckmäßig über einen weiteren Extruderzugeführt. Etwa vorhandene Fremdkörper oder Verunreinigungen lassen sich aus der Polymerschmelze vorder Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d. h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei ca. 80 bis 130 °C und die Querstreckung bei ca. 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofem gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Die Folie kann weiterhin auf mindestens einer ihrer Oberflächen beschichtet werden, so dass die Beschichtung auf der fertigen Folie eine Dicke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweisevor der Querstreckung. Besonders bevorzugt ist die Aufbringung mittels des sogenannten "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion bspw. wird die Folie dadurch siegelfähig, bedruckbar, metallisierbar, sterilisierbar, antistatisch oder sie verbessern z.B. die Aromabarriere oder ermöglichen die Haftung zu Materialien, die ansonsten nicht auf der Folienoberfläche haften würden (z.B. fotografische Emulsionen). Beispiele für Stoffe/Zusammensetzungen, die eine zusätzliche Funktionalität verleihen sind:

Acrylate, wie sie bspw. beschrieben sind in der **WO 94/13476**, Ethylvinylalkohole, PVDC, Wasserglas ($Na_2SiO_4$), hydrophilische Polyester (5-Na-sulfoisophthalsäurehaltige PET/IPA Polyester wie sie bspw. beschrieben sind in der **EP-A-0 144 878, US 4,252,885** oder **EP-A-0 296 620**, Vinylacetate wie sie bspw. beschrieben sind in der **WO 94/13481**, Polyvinylacetate, Polyurethane, Alkali- oder Erdalkalisalze von $C_{10}$-$C_{18}$-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wässrige Lösung, Emulsion oder Dispersion auf eine oder beide Folienoberflächen aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann die zuvor erwähnten gewünschten Schichtdicken.

Des Weiteren können die Folien - vorzugsweise in einem Off-Line-Verfahren mit Metallen wie Aluminium oder keramischen Materialien wie $SiO_x$ oder $Al_xO_y$ beschichtet werden. Dies verbessert insbesondere ihre Gasbarriereeigenschaften.

Die erfindungsgemäße Polyesterfolie weist vorzugsweise noch eine zweite Deckschicht C auf. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere mit dem hohen DEG-Gehalt und/oder PEG-Gehalt, den UV-Absorber, das Flammschutzmittel und/oder Polymermischungen für die Basis- oder die erfindungsgemäße erste Deckschicht enthalten kann, welche aber nicht mit den der ersten Deckschicht identisch sein müssen. Die zweite Deckschicht kann auch andere gängige Deckschichtpolymere enthalten, die auch mit UV-Absorber und/oder dem Flammschutzmittel ausgerüstet sein können.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive sowie das Flammschutzmittel und/oder den UV-Absorber enthalten. Die Dicke der Zwischenschicht ist im allgemeinen größer als 0,3 μm und liegt vorzugsweise im Bereich von 0,5 bis 15 μm, insbesondere 1,0 bis 10 μm.

Die Dicke der Deckschicht(en) ist im allgemeinen größer als 0,1 μm und liegt vorzugsweise im Bereich von 0,2 bis 5 μm, insbesondere 0,2 bis 4 μm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 500 μm, insbesondere 5 bis 450 μm, vorzugsweise 6 bis 300 μm, wobei die Basisschicht einen Anteil von vorzugsweise etwa 40 bis 90 % an der Gesamtdicke hat.

Die erfindungsgemäße Folie ist ohne Umweltbelastung problemlos rezyklierbar, wodurch sie sich beispielsweise für die Verwendung als kurzlebige Werbeschilder, beim Messebau und für andere kurzlebige Werbeartikel, wo insbesondere Brandschutz und UV-Absorption gewünscht werden, eignet.

Ein weiterer Vorteil besteht darin, dass die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass das Regenerat in einem Anteil von bis zu 50 Gew.-%, bevorzugt 10 bis 50 Gew.-%, jeweils bezogen auf das Gesamtgewicht der Folie, wiederverwendet werden kann, ohne dass dabei die physikalischen Eigenschaften der Folie nennenswert negativ beeinflusst werden.

Zusammengefasst zeichnet sich die erfindungsgemäße Folie insbesondere durch eine gute Thermoformbarkeit, die Schwerentflammbarkeit nach DIN 4102 (Baustoffklasse B1 und B2), eine UV-Licht-Undurchlässigkeit, eine hohe UV-Stabilität, einen niedrigen Glanz, insbesondere einen niedrigen Glanz der Folienoberfläche A, und durch eine vergleichsweise niedrige Trübung aus. Außerdem besitzt sie ein. gutes Wickel- und Verarbeitungsverhalten. Weiterhin ist erwähnenswert, dass die erfindungsgemäße Deckschicht gut mit Kugelschreiber, Filzstift oder Füllfeder beschriftbar ist.

Der Glanz der Folienoberfläche A ist niedriger als 70. In einer bevorzugten Ausführungsform beträgt der Glanz dieser Seite weniger als 60 und in einer besonders bevorzugten Ausführungsform weniger als 50. Diese Folienoberfläche vermittelt damit einen besonders hohen werbewirksamen Charakter und eignet sich daher insbesondere als außenliegende Oberfläche bei einer Verpackung.

Daneben erfüllt die Folie die Anforderungen der Baustoffklassen B1 und B2 nach DIN 4102 Teil 1 und Teil 2 und zeigt keine Versprödung bei Temperaturbelastung.

Die Trübung der Folie ist kleiner als 40 %. In einer bevorzugten Ausführungsform beträgt die Trübung der Folie weniger als 35 % und in einer besonders bevorzugten Ausführungsform weniger als 30 %. Durch die vergleichsweise geringe Trübung der Folie (verglichen mit einer matten Monofolie, siehe Vergleichsbeispiel ) kann die Folie z. B. im Konterdruck bedruckt werden oder es können Sichtfenster eingebaut werden, durch die z.B. das Füllgut sehr gut zu erkennen ist.

Durch die Kombination vorteilhafter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen sowie Thermoformanwendungen.

Weitere Anwendungsgebiete sind die Verwendung zur Herstellung von Etiketten (Labels), als Trennfolie oder als Prägefolie.

Die nachstehende Tabelle (Tabelle 1) fasst die wichtigsten erfindungsgemäßen Folieneigenschaften noch einmal zusammen.

**Tabelle 1**

| | erfindungsgemäßer Bereich | bevorzugt | besonders bevorzugt | Einheit | Messmethode |
|---|---|---|---|---|---|
| Glanz, Seite A (Messwinkel 60°) | < 70 | < 60 | < 50 | | DIN 67 530 |
| Trübung | < 40 | < 35 | < 30 | % | ASTM-D 1003-52 |
| Reibungskoeffizient: | | | | | DIN 53 375 |
| A-Seite gegen sich selbst | < 0,6 | <0,55 | < 0,50 | | |
| C- bzw. B-Seite gegen sich selbst | < 0,5 | <0,55 | < 0,55 | | |
| mittlere Rauigkeit $R_a$ A-Seite | 200 – 600 | 230 – 550 | 250 – 530 | nm | DIN 4768, bei einem Cut-off von 0,25 nm |
| Gelbwert (YID) | < 30 | <20 | <10 | | DIN 6167 |
| Hohe UV-Stabilität | | | | | |
| UV-Licht-Durchlässigkeit ab Wellenlänge | > 350 | > 360 | > 370 | nm | |
| Baustoffklasse nach DIN 4102 Teil 2 und Teil 1 | erfüllt B 2<br>erfüllt B 1 | | | | |
| Thermoformbarkeit | Ja | | | | |
| Verstreckfaktor beim Thermoformen | 1,5 – 2,0 | | | | |
| Detailwiedergabe beim Thermoformen | gut | | | | |

Zur Charakterisierung der Rohstoffe und der Folien wurden die folgenden Methoden benutzt:

**Meßmethoden**

DIN = Deutsches Institut für Normung
ISO = International Organization for Standardization
ASTM = American Society for Testing and Materials

**SV (DCE), IV (DVE)**

Die Standardviskosität SV (DCE) wird, angelehnt an DIN 53726, in Dichloressigsäure gemessen.
Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**DEG-Gehalt/PEG-Gehalt/IPA-Gehalt**

Der DEG-/PEG-/IPA-Gehalt wird gaschromatografisch nach Verseifung in methanolischer KOH und Neutralisation mit wässrigem HCl bestimmt.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mit der sogenannten Tintenmethode (DIN 53 364) bestimmt.

**Trübung**

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muß mit dem Einstrahlwinkel angegeben werden.

**Rauigkeit**

Die Rauigkeit $R_a$ der Folie wurde nach DIN 4768 bei einem Cut-off von 0,25 nm bestimmt.

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

### Mechanische Eigenschaften

Der E-Modul und die Reißfestigkeit und die Reißdehnung werden in Längs- und Querrichtung nach ISO 527-1-2 gemessen.

### Bewitterung (beidseitig), UV-Stabilität

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 W/$m^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

Numerische Werte von < 0,3 sind vemachlässigbar und bedeuten, dass keine signifikante Farbänderung vorliegt.

### Gelbwert

Der Gelbwert (YID) ist die Abweichung von der Farblosigkeit in Richtung "Gelb" und wird gemäß DIN 6167 gemessen Gelbwerte (YID) von < 5 sind visuell nicht sichtbar.
Bei nachstehenden Beispielen und Vergleichsbeispielen handelt es sich jeweils um transparente Folien unterschiedlicher Dicke, die auf der beschriebenen Extrusionsstraße hergestellt werden.
Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, dem Gelbwert (YID), der Oberflächendefekte, der Lichttransmission, dem Brandschutz und des Glanzes geprüft.
Die folgenden Beispiele illustrieren die Erfindung.

### Beispiel 1

a) Zubereitung der Komponente II für die erfindungsgemäße Deckschichtmischung

Ein Copolyester mit ca. 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:
Ein 2 l fassender Reaktionsbehälter aus Edelstahl, der mit einem Ankerrührer, einem Thermoelement zur Messung der Temperatur des Gefäßinhalts, einer 18 Zoll-Claisen/Vigreux-Destillationskolonne mit Kühler und Vorlage, einer Einlassöffnung und einem Heizmantel ausgerüstet war, wurde auf 190 °C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer ($Na_2CO_3$ 10 $H_2O$ - 0,439 g) und ein Umesterungskatalysator ($(Mn(OAc)_2$ 4 $H_2O$ ; 0,563 g Ac=Acetat) in ein Gefäß gegeben. Das Gemisch wurde unter Rühren erhitzt, wobei Methanol abdestillierte. Während der Destillation wurde die Gefäßtemperatur allmählich auf 250 °C erhöht. Als das Gewicht des Destillates der theoreischen Methanolausbeute entsprach, wurde eine Ethylenglykollösung mit einem Gehalt von 0,188 g phosphoriger Säure zugesetzt. Die Destillationskolonne wurde durch einen gekrümmten Dampfabzug mit Vorlage ersetzt. Dem Reaktionsgemisch wurden 20 g reines Ethylencarbonat zugegeben, und sofort setzte eine heftige Gasentwicklung ($CO_2$) ein. Die $CO_2$-Entwicklung ließ nach etwa 10 min nach. Es wurde dann ein Unterdruck von 240 mm Hg gezogen und der Polykondensationskatalysator (0,563 g $Sb_2O_3$) in einer Ethylenglykolaufschlämmung) hinzugefügt. Das Reaktionsgemisch wurde unter Beibehaltung des Unterdruckes von 240 mm Hg 10 min gerührt, wonach der Druck in Stufen von jeweils 10 mm Hg/min von 240 mm Hg auf 20 mm Hg weiter reduziert wurde. Sobald das Vakuum im System auf 20 mm Hg reduziert war, wurde die Gefäßtemperatur mit einer Geschwindigkeit von 2 °C/min von 250 °C auf 290 °C angehoben. Bei einer Temperatur von 290 °C im Gefäß wurde die Rührergeschwindigkeit gedrosselt und der Druck auf höchstens 0,1 mm Hg gesenkt. Zu diesem Zeitpunkt wurde ein Amperemeterablesung des Rührermotors vorgenommen. Die Viskosität des Polymeren wurde gesteuert, indem man die Polykondensation nach festen Werten für die Veränderung der Amperezahl des Rührermotors von (jeweils) 2 - 3 A ablaufen ließ. Als das gewünschte Molgewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.

B) Mischungsherstellung für die erfindungsgemäße Deckschicht A

Es wurden 75 Gew.-% der Komponente I (Polyethylenterephthalat mit einem SV-Wert von 680) mit 15 Gew.-% der Komponente II und 10 Gew.-% eines Masterbatches, welches den UV-Stabilisator enthält dem Einfülltrichter eines Zweischneckenextruders zugeführt und die Komponenten zusammen bei ca. 300 °C extrudiert und dem Deckschichtkanal A einer Mehrschichtdüse zugeführt.
Das Masterbatch setzt sich aus 5 Gew.-% 2-(4,6-Diphenyl-1,3,5-triazin-2-yl)-5-(hexyl)-oxyphenol (® TINUVIN 1577; Fa. Ciba-Geigy) als UV-Absorber und 95 Gew.-% Polyester zusammen.

Basisschicht B:

Das vorgetrocknete Flammschutzmittel wird in Form eines Masterbatches in die Basisschicht dosiert.
Das Flammschutz-Masterbatch setzt sich aus 20 Gew.-% Flammschutzmittel und 80 Gew.-% Polyester zusammen.
Bei dem Flammschutzmittel handelt es sich um die organische, im Polyester lösliche Phosphorverbindung Amgard P1045® der Fa. Albright & Wilson.
Die Basisschicht hat folgende Zusammensetzung:

| | |
|---|---|
| 75 Gew.-% | Polyethylenterephthalat mit einem SV-Wert von 800 und einem DEG-Gehalt von 1,6 Gew.-% und einem PEG-Gehalt von 1,6 Gew.-%. |
| 5 Gew.-% | Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 μm |
| 20 Gew.-% | des Flammschutz-Masterbatches. |

Die Komponenten der Basisschicht werden bei Raumtemperatur aus separaten Dosierbehältem in einen Vakuumtrockner gefüllt, der vor dem Einfüllzeitpunkt bis zum Ende der Verweilzeit ein Temperaturspektrum von 25 °C bis 130 °C durchläuft. Während der 4-stündigen Verweilzeit wird das Rohstoffgemisch mit 61 Upm gerührt.
Das vorkristallisierte bzw. vorgetrocknete Rohstoffgemisch wird in dem nachgeschalteten, ebenfalls unter Vakuum stehenden Hopper bei 140 °C 4 Stunden nachgetrocknet und dem Extruder für die Basisschicht zugeführt.

Deckschichten A und C:

Ebenfalls wurden Chips aus Polyethylenterephthalat mit einem DEG-Gehalt von 1,6 Gew.-% und einem PEG-Gehalt von 1,6 Gew.-% und einem Füllstoff und UV-Masterbatch dem Extruder für die Deckschicht C zugeführt. Durch Koextrusion und anschließende stufenweise Orientierung in Längs- und Querrichtung wurde dann eine transparente dreischichtige Folie mit ABC-Aufbau und einer Gesamtdicke von 12 μm hergestellt. Die Deckschichten hatten ein Dicke von jeweils 1,5 μm.

Deckschicht A:

| | |
|---|---|
| 75 Gew.-% | Komponente I |
| 15 Gew.-% | Komponente II und |
| 10 Gew.-% | UV-Masterbatch (5 Gew.-% ® TINUVIN 1577, 95 Gew.-% Polyester) |

Deckschicht C

| | |
|---|---|
| 80 Gew.-% | Polyethylenterephthalat mit einem SV-Wert von 800 und einem DEG-Gehalt von 1,6 Gew.-% und einem PEG-Gehalt von 1,6 Gew.-%. |
| 10 Gew.-% | Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5μm. |
| 10 Gew.-% | UV-Masterbatch (5 Gew.-% ® TINUVIN 1577, 95 Gew.-% Polyester) |

Die einzelnen Verfahrensschritte waren:

| | | |
|---|---|---|
| Längsstreckung | Temperatur | 85-135 °C |
| | Längsstreckverhältnis | 4,0 : 1 |
| Querstreckung | Temperatur | 85-135 °C |
| | Querstreckverhältnis | 4,0 : 1 |
| Fixierung | Temperatur | 230 °C |

**Beispiel 2**

Analog zu Beispiel 1 wurde durch Koextrusion eine dreischichtige Folie mit einer Gesamtdicke von 12 μm hergestellt. Es wurde nur die Zusammensetzung der Deckschicht A geändert:

Deckschicht A:

| | |
|---|---|
| 70 Gew.-% | Komponente I |
| 20 Gew.-% | Komponente II und |
| 10 Gew.-% | UV-Masterbatch. |

**Beispiel 3**

Eine koextrudierte Folie mit der Rezeptur gemäß Beispiel 1, bei der die Deckschicht A wie folgt zusammengesetzt war:

| | |
|---|---|
| 65 Gew.-% | Komponente I |
| 25 Gew.-% | Komponente II und |
| 10 Gew.-% | UV-Masterbatch. |

**Beispiel 4**

Eine koextrudierte Folie mit der Rezeptur gemäß Beispiel 1, bei der die Deckschicht A wie folgt zusammengesetzt war:

| | |
|---|---|
| 55 Gew.-% | Komponente I |
| 35 Gew.-% | Komponente II und |
| 10 Gew.-% | UV-Masterbatch |

**Vergleichsbeispiel**

Es wurde eine Monofolie hergestellt, die wie die Deckschicht A aus Beispiel 3 zusammengesetzt war, die aber keinen UV-Absorber, kein Flammschutzmittel enthält und deren PET-Basispolymer kein PEG enthält und dessen

DEG-Gehalt bei handelsüblichen 0,7 Gew.-% liegt. Die Folienoberflächen hatten die geforderte Mattheit, die Folie entsprach jedoch nicht den gestellten Anforderungen, weil sie zu trüb war. Außerdem war es sehr schwer, die Folie verfahrenssicher und daher wirtschaftlich herzustellen.

Des Weiteren ist die Folie nicht UV-stabil und läßt das schädliche UV-Licht durch. Nach 1000 Stunden Bewitterung zeigt die Folie Risse und Versprödungserscheinungen sowie eine sichtbare Gelbfärbung. Die Folie erfüllt nicht die Anforderungen der Baustoffklassen B1 und B 2. Die Folie ist unzureichend thermoformbar.

Die Ergebnisse der Ausführungsbeispiele und des Vergleichsbeispiels(VB) sind in der nachfolgenden Tabelle 2 zusammengefasst:

Tabelle 2

| Beispiel Nr. | Erfüllt nach DIN 4102 die Baustoffklassen | Foliendicke (µm) | Deckschichtdicke A/C (µm) | Folienaufbau | Glanz (60° Messwinkel) | | Trübung | Strahlendurchlässigkeit (nm) |
|---|---|---|---|---|---|---|---|---|
| | | | | | A-Seite | C-Seite | | |
| 1 | B1 und B 2 | 12 | 1,5/1,5 | ABC | 65 | 175 | 25 | >360 |
| 2 | B1 und B 2 | 12 | 1,5/1,5 | ABC | 55 | 175 | 26 | >360 |
| 3 | B1 und B 2 | 12 | 1,5/1,5 | ABC | 45 | 175 | 28 | >360 |
| 4 | B1 und B 2 | 12 | 1,5/1,5 | ABC | 35 | 175 | 30 | >360 |
| VB | | 12 | | A | 35 | 160 | 70 | >280 |

Nach 1000 Stunden Bewitterung mit dem Atlas CI65 Weather Ometer zeigen die Folien aus den Beispielen 1 - 4 keinerlei Versprödungen, keine Risse und Gelbwerte von < 10.

Die Folien aus den Beispielen 1 bis 4 lassen sich auf handelsüblichen Tiefziehmaschinen, z.B. von Fa. Illig (Deutschland), ohne Vortrocknung zu Formkörpern thermoformen. Die Detailwiedergabe der tiefgezogenen Teile ist bei einer homogenen Oberfläche hervorragend.

## Patentansprüche

1. Matte, biaxial orientierte, koextrudierte, thermoformbare Polyesterfolie, welche eine Basisschicht (B) aus einem thermoplastischen Polyester mit einem Diethylenglykolgehalt und/oder einem Polyethylenglykolgehalt von größer als 1,3 Gew.-% und mindestens eine matte Deckschicht und gegebenenfalls weitere Zwischenschichten aufweist, und mindestens einen UV-Absorber und mindestens ein Flammschutzmittel enthält, wobei die matte Deckschicht eine Mischung und/oder ein Blend aus zwei Komponenten I und II enthält, wobei die Komponente I im wesentlichen ein Polyethylenterephthalat-Homopolymer oder Polyethylenterephthalat Copolymer oder eine Mischung aus Polyethylenterephthalat-Homopolymer oder Polyethylenterephthalat Copolymeren ist und die Komponente II ein Polymer ist, welches mindestens eine Sulfonatgruppe enthält.

2. Polyesterfolie gemäß Anspruch 1, **dadurch gekennzeichnet, dass** sie einen Schichtaufbau A-B-C aufweist, wobei die Deckschichten A und C gleich oder verschieden sein können.

3. Polyesterfolie gemäß Anspruch 1 oder 2, **dadurch gekennzeichnet, dass** die Basisschicht zu mindestens 70 Gew.-% aus einem thermoplastischen Polyester besteht.

4. Polyesterfolie gemäß einem oder mehreren der Ansprüche 1 bis 3, **dadurch gekennzeichnet, dass** als thermoplastischer Polyester Polyethylenterephthalat oder ein Polyester verwendet wird, der zu mindestens 90 Mol-% aus Ethylenglykol- und Terephthalsäureeinheiten oder aus Ethylenglykol- und Naphthalin-2,6-dicarbonsäureeinheiten besteht.

5. Polyesterfolie gemäß einem oder mehreren der Ansprüche 1 bis 4, **dadurch gekennzeichnet, dass** das Polyethylenterephthalat der Basisschicht einen Diethylenglykolgehalt und oder einen Polyethylenglykolgehalt von 1,6 bis 5 Gew.-%, aufweist.

6. Polyesterfolie gemäß einem oder mehreren der Ansprüche 1 bis 5, **dadurch gekennzeichnet, dass** es sich bei der Komponente II der Mischung bzw. des Blends der Deckschicht um ein Copolymer handelt, welches aus dem Kondensationsprodukt von Isophthalsäure, gegebenfalls mindestens einer aliphatischen Dicarbonsäure der Formel $HOOC(CH_2)_nCOOH$ mit n = 1 - 11, mindestens einem Sulfomonomeren, das eine Alkalimetallsulfonatgruppe an dem aromatischen Teil einer Dicarbonsäure aufweist, und einem copolymerisierbaren aliphatischen oder cycloaliphatischen Glykol oder deren zur Bildung von Polyestern befähigten Derivaten besteht.

7. Polyesterfolie gemäß einem oder mehreren der Ansprüche 1 bis 6, **dadurch gekennzeichnet, dass** die zur Bildung der Komponente II verwendeten Monomeren in folgenden Molverhältnissen vorhanden sind Isophthalsäure 65 - 95 Mol-%, aliphatische Dicarbonsäure 0 - 30 Mol-%, Sulfomonomeres 5 - 15 Mol-% und die zur Bildung von 100 Mol-% notwendige stöchiometrische Menge an Glykol.

8. Polyesterfolie gemäß einem oder mehreren der Ansprüche 1 bis 7, **dadurch gekennzeichnet, dass** der UV-Absorber und/oder das Flammschutzmittel in der Basisschicht und/oder den Deckschichten enthalten ist.

9. Polyesterfolie gemäß einem oder mehreren der Ansprüche 1 bis 8, **dadurch gekennzeichnet, dass** als Flammschutzmittel organische Phosphorverbindungen oder Mischungen von organischen Phosphorverbindungen und als UV-Absorber 2-Hydroxybenzotriazole oder Triazine oder Mischungen dieser UV-Absorber verwendet werden.

10. Polyesterfolie gemäß einem oder mehreren der Ansprüche 1 bis 9, **dadurch gekennzeichnet, dass** als UV-Absorber 2-(4,6-Diphenyl-1,3,5-triazin-2-yl)-5-(hexyl)oxyphenol oder 2,2'-Methylen-bis-6-(2H-benzotriazol-2-yl)-4-(1,1,2,2-tetramethylpropyl)-phenol oder Mischungen dieser UV-Absorber mit anderen verwendet werden.

11. Polyesterfolie gemäß einem oder mehreren der Ansprüche 1 bis 10, **dadurch gekennzeichnet, dass** die Konzentration des UV-Absorbers oder der UV-Absorber 0,01 - 5 Gew.-%, bezogen auf das Gewicht der sie enthaltenden Schichten, beträgt.

**12.** Polyesterfolie gemäß einem oder mehreren der Ansprüche 1 bis 11, **dadurch gekennzeichnet, dass** das Flammschutzmittél in dem es enthaltenden thermoplastischen Polyester löslich ist.

**13.** Polyesterfolie gemäß einem oder mehreren der Ansprüche 1 bis 12 **dadurch gekennzeichnet, dass** die Konzentration des Flammschutzmittels oder der Flammschutzmittel 0,5 - 30 Gew.-%, bevorzugt 1 - 20 Gew.-%, bezogen auf das Gewicht der sie enthaltenden Schichten, beträgt.

**14.** Polyesterfolie gemäß einem oder mehreren der Ansprüche 1 bis 13, **dadurch gekennzeichnet, dass** sie auf mindestens einer Oberfläche funktional beschichtet ist.

**15.** Verfahren zur Herstellung einer Polyesterfolie gemäß einem oder mehreren der Ansprüche 1 bis 14, **dadurch gekennzeichnet, dass** man die für die Herstellung der Basis- und Deckschichten und gegebenfalls Zwischenschichten erforderlichen Ausgangsstoffe über einen oder mehrere Extruder durch eine Mehrschichtdüse koextrudiert und die erhaltene Folie biaxial verstreckt und thermofixiert und gegebenenfalls beschichtet.

**16.** Verfahren gemäß Anspruch 15, **dadurch gekennzeichnet, dass** das Flammschutzmittel und/oder der UV-Absorber mittels der Masterbatch-Technologie zugesetzt werden.

**17.** Verwendung einer Polyesterfolie gemäß einem oder mehreren der Ansprüche 1 bis 14 zur Herstellung von Formkörpern.

**18.** Formkörper hergestellt durch Tiefrichen einer Polyesterfolie gemäß einem oder mehreren der Ansprüche 1 bis 14.

## Claims

**1.** A matt, biaxially oriented, coextruded, thermoformable polyester film which has a base layer (B) made from a thermoplastic polyester with a diethylene glycol content and/or a polyethylene glycol content of more than 1.3% by weight, and has at least one matt outer layer and, if desired, has other intermediate layers, and comprises at least one UV absorber and at least one flame retardant, where the matt outer layer comprises a mixture and/or a blend made from two components I and II, where component I is substantially a polyethylene terephthalate homopolymer or polyethylene terephthalate copolymer or a mixture made from polyethylene terephthalate homopolymer or from polyethylene terephthalate copolymers and component II is a polymer which has at least one sulfonate group.

**2.** The polyester film as claimed in claim 1, wherein the film has an A-B-C layer structure, where the outer layers A and C may be identical or different.

**3.** The polyester film as claimed in claim 1 or 2, wherein at least 70% by weight of the base layer is composed of a thermoplastic polyester.

**4.** The polyester film as claimed in one or more of claims 1 to 3, wherein the thermoplastic polyester used comprises polyethylene terephthalate or a polyester, at least 90 mol% of which is composed of ethylene glycol units and of terephthalic acid units or of ethylene glycol units and of naphthalene-2,6-dicarboxylic acid units.

**5.** The polyester film as claimed in one or more of claims 1 to 4, wherein the polyethylene terephthalate of the base layer has a diethylene glycol content and/or a polyethylene glycol content of from 1.6 to 5% by weight.

**6.** The polyester film as claimed in one or more of claims 1 to 5, wherein component II of the mixture and, respectively, of the blend of the outer layer is a copolymer which is composed of the condensation product of isophthalic acid, and, if desired, of at least one aliphatic dicarboxylic acid of the formula $HOOC(CH_2)_nCOOH$, where n = 1 to 11, and of at least one sulfo monomer which has an alkali metal sulfonate group on the aromatic moiety of a dicarboxylic acid, and of a copolymerizable aliphatic or cycloaliphatic glycol, or of derivatives of these capable of forming polyesters.

**7.** The polyester film as claimed in one or more of claims 1 to 6, wherein the monomers used to form component II

are present in the following molar ratios: isophthalic acid from 65 to 95 mol%, aliphatic dicarboxylic acid from 0 to 30 mol%, sulfo monomer from 5 to 15 mol%, and the stoichiometric amount of glycol needed to reach 100 mol%.

**8.** The polyester film as claimed in one or more of claims 1 to 7, wherein the UV absorber and/or the flame retardant is/are present in the base layer and/or in the outer layers.

**9.** The polyester film as claimed in one or more of claims 1 to 8, wherein the flame retardants used comprise organic phosphorus compounds or a mixture of organic phosphorus compounds, and the UV absorbers used comprise 2-hydroxybenzotriazoles or triazines or a mixture of these UV absorbers.

**10.** The polyester film as claimed in one or more of claims 1 to 9, wherein the UV absorbers used comprise 2-(4,6-diphenyl-1,3,5-triazin-2-yl)-5-hexyloxyphenol or 2,2'-methylenebis-6-(2H-benzotriazol-2-yl)-4-(1,1,2,2-tetramethylpropyl)-phenol, or a mixture of these UV absorbers with others.

**11.** The polyester film as claimed in one or more of claims 1 to 10, wherein the concentration of the UV absorber(s) is from 0.01 to 5% by weight, based on the weight of the layers in which they are present.

**12.** The polyester film as claimed in one or more of claims 1 to 11, wherein the flame retardant is soluble in the thermoplastic polyester comprising the same.

**13.** The polyester film as claimed in one or more of claims 1 to 12, wherein the concentration of the flame retardant (s) is from 0.5 to 30% by weight, preferably from 1 to 20% by weight, based on the weight of the layers comprising the same.

**14.** The polyester film as claimed in one or more of claims 1 to 13, wherein at least one surface of the film has a functional coating.

**15.** A process for producing a polyester film as claimed in one or more of claims 1 to 14, which comprises coextruding, by way of one or more extruders through a coextrusion die, the starting materials required for producing the base layers and outer layers and any intermediate layers present, and biaxially orienting and heat-setting, and if desired coating, the resultant film.

**16.** The process as claimed in claim 15, wherein the flame retardant and/or the UV absorber are added using masterbatch technology.

**17.** The use of a polyester film as claimed in one or more of claims 1 to 14 for producing moldings.

**18.** A molding produced by thermoforming a polyester film as claimed in one or more of claims 1 to 14.

## Revendications

**1.** Feuille polyester thermoformable, coextrudée, biaxialement orientée, mate, laquelle comprend une couche de base (B) en un polyester thermoplastique avec une teneur en diéthylèneglycol et/ou une teneur en polyéthylène glycol supérieure à 1,3 % en poids et au moins une couche de surface mate et le cas échéant d'autres couches intermédiaires, et contient au moins un absorbeur UV et au moins un produit ignifugeant, dans laquelle la couche de surface mate contient un mélange et/ou une combinaison de deux composants I et II, dans lequel le composant I est essentiellement un homopolymère de polytéthylènetéréphtalate ou un copolymère de polytéthylènetéréphtalate ou un mélange d'homopolymère de polytéthylènetéréphtalate ou de copolymères de polytéthylènetéréphtalate et le composant II est un polymère, lequel contient au moins un groupe sulfonate.

**2.** Feuille de polyester selon la revendication 1, **caractérisée en ce qu'**elle présente une construction de couche A-B-C, dans laquelle les couches de surface A et C peuvent être identiques ou différentes.

**3.** Feuille de polyester selon la revendication 1 ou 2, **caractérisée en ce que** la couche de base comprend au moins 70 % en poids d'un polyester thermoplastique.

**4.** Feuille de polyester selon l'une quelconque des revendications 1 à 3, **caractérisée en ce que** l'on utilise à titre

de polyester thermoplastique du polyéthylènetéréphtalate ou un polyester comprenant au moins 90 % en moles d'unités d'éthylène glycol et d'acide téréphtalique ou d'unités éthylène glycol et d'acide naphtalène-2,6-dicarboxylique.

**5.** Feuille de polyester selon l'une quelconque des revendications 1 à 4, **caractérisée en ce que** le polyéthylènetéréphtalate de la couche de base présente une teneur en diéthylèneglycol et/ou une teneur en polyéthylène glycol de 1,6 % à 5 % en poids.

**6.** Feuille de polyester selon l'une quelconque des revendications 1 à 5, **caractérisée en ce que** le composé II du mélange ou de la combinaison contenue dans la couche de surface est un copolymère, lequel est composé du produit de la condensation de l'acide isophtalique, le cas échéant d'au moins un acide aliphatique dicarboxylique de formule $HOOC(CH_2)_nCOOH$ avec n = 1 à 11, d'au moins un sulfomonomère, qui présentant un groupe sulfonate de métal alcalin sur la partie aromatique d'un acide dicarboxylique, et d'un glycol aliphatique ou cycloaliphatique copolymérisable ou de leurs dérivés susceptibles de formes des polyesters.

**7.** Feuille de polyester selon l'une quelconque ou plusieurs des revendications 1 à 6, **caractérisée en ce que** les monomères utilisés pour la formation du composé II sont présents dans les proportions molaires suivantes acide isophtalique de 65 % à 95 % en mole, acide aliphatique dicarboxylique de 0 % à 30 % en mole, sulfomonomères de 5 % à 15 % en mole et la quantité stoechiométrique nécessaire de glycol pour compléter à 100 % en mole.

**8.** Feuille de polyester selon l'une quelconque des revendications 1 à 7, **caractérisée en ce que** l'absorbeur UV et/ou le produit ignifugeant sont contenus dans la couche de base et/ou dans les couches intermédiaires.

**9.** Feuille de polyester selon l'une quelconque des revendications 1 à 8, **caractérisée en ce que** des composés organophosphoriques, ou des mélanges de composés organophosphoriques sont utilisés en tant que produit ignifugeant et que du 2-hydroxybenzotriazote ou de la triazine ou des mélanges de ces absorbeurs UV sont utilisés en tant qu'absorbeurs UV.

**10.** Feuille de polyester selon l'une quelconque des revendications 1 à 9, **caractérisée en ce que** du 2-(4,6-diphényl-1,3,5-triazine-2-yl)-5-(hexyl)oxyphénol ou du 2,2'-méthylène-bis-6-(2H-benzotriazol-2-yl)-4-(1,1,2,2-tétraméthylpropyl)-phénol ou des mélanges de ces absorbeurs UV sont utilisés en tant qu'absorbeurs UV.

**11.** Feuille de polyester selon l'une quelconque des revendications 1 à 10, **caractérisée en ce que** la concentration de l'absorbeur UV ou des absorbeurs UV s'élève à une quantité de 0,01 % à 5 % en poids, par rapport au poids des couches le (les) contenant.

**12.** Feuille de polyester selon l'une quelconque des revendications 1 à 11, **caractérisée en ce que** le produit ignifugeant est soluble dans le polyester thermoplastique dans lequel il est contenu.

**13.** Feuille de polyester selon l'une quelconque des revendications 1 à 12, **caractérisée en ce que** la concentration du produit ignifugeant ou des produits ignifugeants s'élève à une quantité de 0,5 % à 30 % en poids, de préférence de 1 % à 20 % en poids, par rapport au poids des couches le (les) contenant.

**14.** Feuille de polyester selon l'une quelconque des revendications 1 à 11, **caractérisée en ce qu'**elle est revêtue sur au moins une surface de couche possédant une fonctionnalité.

**15.** Procédé pour fabriquer une feuille de polyester selon l'une quelconque des revendications 1 à 14, **caractérisé en ce que**, pour la fabrication des couches de base et de surface et le cas échéant des couches intermédiaires l'on coextrude les matières de départ via une ou plusieurs extrudeuses à travers une buse d'extrusion multicouches et la feuille obtenue est biaxialement étirée et traitée par thermofixation et le cas échéant revêtue.

**16.** Procédé selon la revendication 15, **caractérisé en ce que** le produit ignifugeant et/ou l'absorbeur UV sont ajoutés au moyen de la technologie mélange-maître.

**17.** Utilisation d'une feuille de polyester selon l'une quelconque des revendications 1 à 14 pour la fabrication de corps moulés.

**18.** Corps moulés fabriqué par emboutissage d'une feuille de polyester selon l'une quelconque des revendications de là 14.